# EUROPÄISCHE PATENTANMELDUNG

(11) **EP 0 793 323 A2**
(43) Veröffentlichungstag der Anmeldung: **03.09.1997**
(21) Anmeldenummer: 97102942.6
(22) Anmeldetag: 22.02.1997
(51) Int. Cl.: H02G 3/08, H02G 3/06

(54) **Verschraubung**

(30) Priorität: 02.03.1996 DE 19608120
(71) Anmelder: ABB PATENT GmbH, 68309 Mannheim (DE)
(72) Erfinder: Briske, Heinz, 58507 Lüdenscheid (DE); Knorr, Michael, 58874 Werdohl (DE); Claus, Frank M., 58511 Lüdenscheid (DE)
(74) Vertreter: Rupprecht, Klaus, Dipl.-Ing.

(57) **Zusammenfassung**

Die Erfindung betrifft eine Verschraubung (10) für abgedichtete Leitungsdurchführungen, insbesondere PG--Verschraubung, mit je einem stationären hülsenförmigen Grundteil (12) und einer drehbeweglichen hülsenförmigen Schraubkappe mit zentraler Ausnehmung sowie mit einem zwischen das Grundteil (12) und die Schraubkappe eingefügten ringförmigen Dichtelement (14), durch welche eine Leitung durchgeführt ist, die von dem ringförmigen Dichtelement (14) konzentrisch umfasst ist, welches Dichtelement (14) von den miteinander verschraubten Gewindehülsen elastisch verformt ist und sich abdichtend an die Leitung anlegt, wobei das Dichtelement (14) an seinem Umfang gleichmäßig verteilt angeordnete radiale Einformungen (28, 29) aufweist, die sich jeweils über die axiale Länge des Dichtelements (14) erstrecken.

## Beschreibung

Die Erfindung betrifft eine Verschraubung für abgedichtete Leitungsdurchführungen, insbesondere PG--Verschraubung, mit je einem stationären Grundteil und einer beweglichen Schraubkappe mit zentraler Ausnehmung sowie mit einem zwischen das Grundteil und die Schraubkappe eingefügten ringförmigen Dichtelement, durch welche eine Leitung durchgeführt ist, die von dem ringförmigen Dichtelement konzentrisch umfasst ist, welches Dichtelement von den miteinander verschraubten Gewindehülsen elastisch verformt ist und sich abdichtend an die Leitung anlegt.

Es ist allgemein bekannt, die Leitungsdurchführungen an Gehäusewandungen, zum Beispiel an elektrischen Geräten, für einzelne elektrische Leitungen mit sogenannten PG-Verschraubungen abzudichten. Als PG-Verschraubung oder Panzergewinde-Verschraubung werden ortsfest anzuordnende zweiteilige Klemmverschraubungen bezeichnet, bei welchen ein zwischengefügter Dichtring aus elastischem Material, zum Beispiel Gummi, infolge des axialen Zusammengehens der beiden Verschraubungsteile axial zusammengedrückt wird.

An der betreffenden Stelle der Gehäusewandung wird die vorgesehene PG-Verschraubung angebracht, zum Beispiel angeschraubt, und anschließend die durch die Wandung hindurch zu führende Leitung durch die PG-Verschraubung geschoben. Durch die sich beim Schrauben axial aufeinander zu bewegenden Verschraubungsteile erfolgt eine axiale Quetschung des Dichtrings, wodurch dessen Volumen radial nach innen verdrängt wird, wo es sich an die dort befindliche Leitung anlegt und die Öffnung in der Gehäusewandung abdichtet. Auf diese Weise wird eine Anpassung des Durchmessers des Dichtringes an den der Leitung erreicht, sofern die Durchmesser der Verschraubung und der vorgesehenen Leitung aufeinander abgestimmt sind.

Die bekannten Verschraubungen dieser Art erfordern daher für eine einwandfreie Dichtwirkung jeweils an den Außendurchmesser der durchzuführenden Leitung angepaßte Innendurchmesser der Dichtringenge sowie der Verschraubungsteile.

Dies führt zu einer Vielzahl von unterschiedlichen Größen von Verschraubungen, da bei Verwendung einer nicht angepaßten Größe entweder die angestrebte Dichtwirkung infolge unzulässig hoher Verformung des Dichtrings mit entsprechender Bildung von Verwerfungen und Falten, welche als Dichtungslücken wirken, nicht erreicht wird oder aber weil bei zu geringem Durchmesser die Montage stark erschwert oder gar unmöglich ist.

Ausgehend von diesem Stand der Technik ist es Aufgabe der Erfindung eine Verschraubung der eingangs genannten Art zu schaffen, welche einfach gestaltet und dennoch geeignet ist, für unterschiedliche Leitungsdurchmesser ohne Beeinträchtigung ihrer Dichtwirkung sowie ihrer Handhabung eingesetzt zu werden, so daß die Bevorratung unterschiedlicher Größen entsprechend den vorgesehenen Leitungsabmessungen entfällt.

Diese Aufgabe wird erfindungsgemäß durch die kennzeichnenden Merkmale des Patentanspruchs 1 gelöst. Weitere vorteilhafte Ausgestaltungen und Verbesserungen der Erfindung sind Gegenstand der Unteransprüche.

Erfindungsgemäß ist daher vorgesehen, daß das Dichtelement an seinem Umfang gleichmäßig verteilt angeordnete radiale Einformungen aufweist, die sich jeweils über die axiale Länge des Dichtelements erstrecken.

Mit Hilfe der erfindungsgemäß vorgesehenen Einformungen wird erreicht, daß beim axialen Zusammengehen der Verschraubungsteile für das axial beaufschlagte Dichtelement beziehungsweise für dessen verdrängtes Volumen ausreichender Raum zur Verfügung steht, den es dann ausfüllt, statt Verwerfungen und Falten hervorzurufen.

Entsprechend einer bevorzugten Ausführungsform der Erfindung sind die Einformungen derart ausgebildet, daß die Flanken der radialen Einformungen abwechselnd einen Öffnungswinkel α oder β begrenzen. Dabei wird durch die Öffnungswinkel der maximale Durchmesserausgleich bestimmt, das heißt, je größer der Winkel desto größer ist die mögliche Durchmesserdifferenz. Im folgenden werden die den Winkel α begrenzenden Einformungen als erste Einformungen bezeichnet und die den Winkel β begrenzenden Einformungen als zweite Einformungen.

Eine weitere vorteilhafte Ausführungsform der Erfindung ist dadurch gekennzeichnet, daß das Dichtelement von einer zentralen Dichtmuffe mit gleichmäßig am äußeren Umfang verteilt angeordneten ersten und zweiten radialen Einformungen gebildet ist. Dabei weisen die ersten Einformungen den Öffnungswinkel α auf, während die zweiten radialen Einformungen jeweils zwischen zwei ersten Einformungen angeordnet sind und den Öffnungswinkel β aufweisen.Ferner greift in jede zweite radiale Einformung ein Axialsteg ein, welcher die Flanken der ersten Einformungen radial verlängert. Der Winkel α beträgt entsprechend einer bevorzugten Ausgestaltung zwischen 10° und 20°, vorzugsweise 15°, während der Winkel β größer ist und zwischen 15° und 30°, vorzugsweise 18° beträgt. Dementsprechend ergibt sich für die ersten und zweiten Einformungen ein bevorzugtes Teilungsmaß von 16.

Entsprechend dieser Ausführungsform dienen gemäß einer weiteren Ausgestaltung der Erfindung die den Winkel α begrenzenden ersten Einformungen zum Durchmesserausgleich. Die zweiten Einformungen mit dem Öffnungswinkel β hingegen nehmen jeweils einen Axialsteg auf, der hierbei jeweils die radiale Flankentiefe der ersten Einformungen erhöht. Gleichzeitig wirken diese Axialstege partiell tangential auf die Verformung des Dichtelements ein, das heißt quasi konzentrisch.

In Weiterbildung der Erfindung ist das Dichtelement aus zwei Komponenten gebildet dergestalt, daß die Axialstege eine größere Shorehärte aufweisen als die Dichtmuffe und diese zumindest partiell tangential beaufschlagen. Mit anderen Worten besteht die innenliegende Dichtmuffe aus einem vergleichsweise hochelastischen Material, während die Axialstege aufgrund ihrer größeren Härte steifer sind und hierdurch in Verbindung mit der das Dichtelement konzentrisch beaufschlagenden Schraubkappe der Verschraubung die Dichtmuffe gleichförmig radial nach innen beaufschlagt. Dabei ermöglichen die Einformungen zwischen den Axialstegen dem überschüssigen Volumen der Dichtmuffe das Ausweichen, so daß die seither bei herkömmlichen Verschraubungen auftretenden Verwerfungen und Falten sicher vermieden werden.

Vorteilhafterweise sind die Axialstege jeweils fest mit der zentralen Dichtmuffe verbunden sind. Dies kann dadurch erreicht werden, daß die Axialstege in die entsprechende Einformungen der Dichtmuffe jeweils eingeklebt sind.

Gemäß einer bevorzugten Ausgestaltung der Erfindung jedoch ist die erfindungsgemäße Verschraubung im sogenannten 2K-Spritzverfahren aus zwei-Komponenten gefertigt. Dies gewährleistet einerseits eine sichere Einhaltung der geometrischen und werkstoffbezogenen Parameter, und andererseits ist hiermi eine kostengünstige Massenfertigung möglich.

In Weiterbildung der Erfindung beträgt die radiale Tiefe der Einformungen höchstens 80% der Wanddicke der Dichtmuffe. Dabei kann entsprechend einer Ausführungsform vorgesehen sein, daß die radiale Tiefe der ersten Einformungen höchstens 50% und die der zweiten Einformungen höchstens 70% der Wanddicke der Dichtmuffe beträgt.

Gemäß einer weiteren bevorzugten Gestaltung entspricht die radiale Breite der Flanken der Axialstege der radialen Tiefe der ersten Einformungen. Dies hat sich als günstig erwiesen, um bei bestmöglicher Abdichtung eine möglichst große Durchmesserdifferenz abzudecken.

In diesem Zusammenhang steht auch entsprechend einer Weiterbildung der Erfindung, daß die Breite jedes Axialsteges am äußeren Umfang größer ist als die lichte Weite der ersten Einformungen.

Um die Dichtwirkung bei sonst unveränderter Gestaltung zu verbessern, kann es gemäß einer weiteren vorteilhaften Ausgestaltung zweckmäßig sein, daß die der Schraubkappe zugewandte Stirnseite der Dichtmuffe angefast ist. Hierdurch wird nicht nur die Handhabung der erfindungsgemäßen Verschraubung verbessert, sondern auch durch den zusätzlich geschaffenen Freiraum der Anfasung ein zusätzliches Volumen für das ausweichende Material der Dichtmuffe, welches sich hierbei nahe an die abzudichtende Leitung anlegt.

Diese und weitere vorteilhafte Ausgestaltungen und Weiterbildungen der Erfindung sind in den Unteransprüchen gekennzeichnet.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine erfindungsgemäße Verschraubung im Längsschnitt;
- Fig. 2: einen Querschnitt durch ein zur erfindungsgemäßen Verschraubung gehöriges Dichtelement und
- Fig. 3: eine Ausschnittvergrößerung "X" aus Fig. 2.

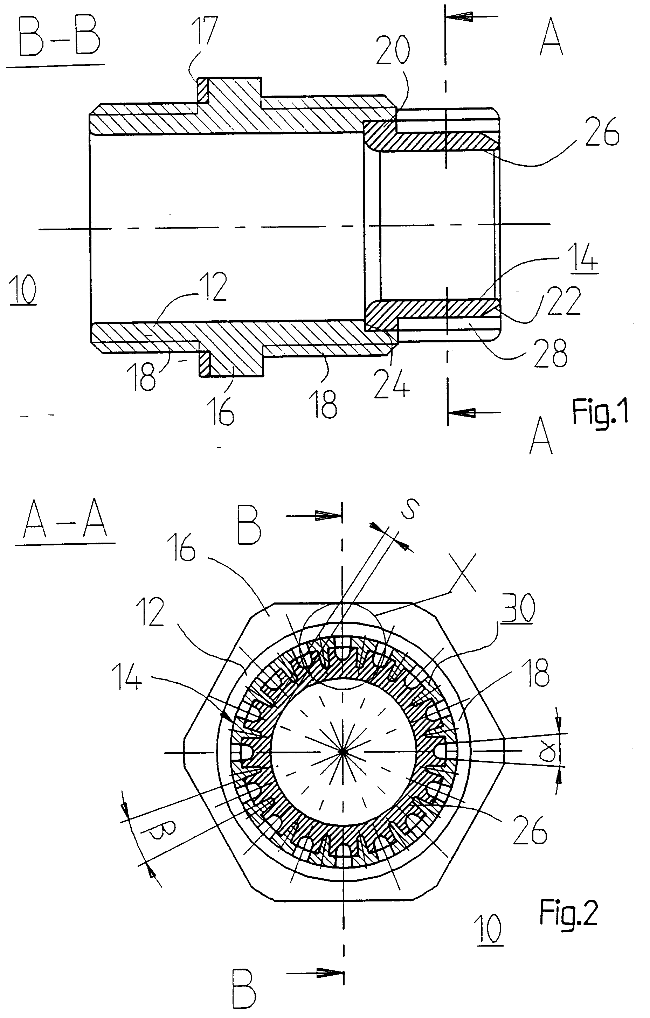

In Fig. 1 ist eine erfindungsgemäße Verschraubung 10 mit einem Grundteil 12 und einem hieran von einer nicht gezeigten anschraubbaren Schraubkappe gehaltenen Dichtelement 14 im Längsschnitt gezeigt, von welcher in Fig. 2 ein Querschnitt dargestellt ist. Diese Verschraubung 10, die ähnlich ausgebildet ist wie eine sogenannte PG-Verschraubung, ist vorgesehen für abgedichtete Leitungsdurchführungen, insbesondere bei elektrischen Geräten.

Das Grundteil 12 der Verschraubung 10 ist als Hohlzylinder ausgebildet, der etwa auf halber Länge einen angeformten Bund 16 aufweist, der als Anschlag beim Einführen in eine nicht näher dargestellte Öffnung in einer Gehäusewandung eines ebenfalls nicht näher gezeigten Gehäuses dient. Gleichzeitig dient der Bund 16, der als Sechskant ausgebildet ist, als Angriffsfläche für ein Haltewerkzeug beim Handhaben der Verschraubung 10.

Das Grundteil ist ferner an beiden Enden, jeweils bis zum Bund 16 mit einem Außengewinde 18 versehen, auf welches einerseits eine hier nicht dargestellte Haltemutter aufgeschraubt ist. An das entgegengesetzte Ende ist das Dichtelement 14 angesetzt, welches gehalten ist von einer hier nicht näher gezeigten Schraubkappe, welche als Gewindehülse mit einem stirnseitigen Deckel mit einer zentralen Ausnehmung ausgebildet ist, durch welche die abzudichtende, hier ebenfalls nicht dargestellte Leitung hindurchgeführt ist.

Eine vorteilhafte Besonderheit des Grundteils 12 der erfindungsgemäßen Verschraubung 10, welche deren Verwendungsmöglichkeiten deutlich erhöht und ihren Einsatz verbessert, besteht in einer an der Halteseite des Bundes 16 dauerhaft, das heißt unverlierbar, angebrachten, zum Beispiel im Zuge der der Fertigung beim Kunststoffspritzgießen mit einem 2K-Formwerkzeug, umlaufenden Dichtlippe 17, die sich gegen die betreffende Gehäusewandung anlegt.

Während das Grundteil aus einem spritzfähigen aber dennoch ausreichend harten Werkstoff gefertigt ist, ist die Dichtlippe 17 aus entsprechend elastischem Material vorgesehen, welches die erforderliche Dichtheit gewährleistet. Mit Hilfe dieser Ausgestaltung der erfindungsgemäßen Verschraubung ist ihre Handhabung in vorteilhafter Weise begünstigt.

Wie aus dem in Fig. 1 gezeigten Längsschnitt weiter zu ersehen ist, besitzt das Dichtelement 14 an seinem zum Grundteil 12 weisenden Ende einen wulstförmigen Rand 20 auf und an dem entgegengesetzten Ende eine Anfasung 22. Der wulstförmige Rand, der sich radial auf etwa die doppelte Wanddicke erweitert, greift beim Einsetzen in das Grundteil 12 in eine hierfür vorgesehene Ringnut 24, während die Anfasung 22 am außenseitigen Stirnende des Dichtelements 14 zum einen infolge der hierdurch bedingten Querschnittsverschwächung flexibler ist und sich dadurch noch besser an die abzudichtende Leitung anlegt und zum anderen mit einer an der hier nicht gezeigten Schraubkappe an dem hiermit korrespondierenden Ende angeformten Schrägschulter zusammenarbeitet und infolgedessen gegen die durchgeführte Leitung beaufschlagt wird.

In der in Fig. 1 gezeigten Querschnittsansicht des Dichtelements 14 der erfindungsgemäßen Verschraubung 10 ist zu erkennen, daß das Dichtelement 14 aus einer innen angeordneten hohlzylindrischen Dichtungsmuffe 26 gebildet ist, die an der äußeren Umfangsfläche mit ersten und zweiten radialen Einformungen 28, 29 unterschiedlicher radialer Tiefe und unterschiedlicher Form versehen ist und hierdurch eine zahnradähnliche Querschnittsform aufweist.

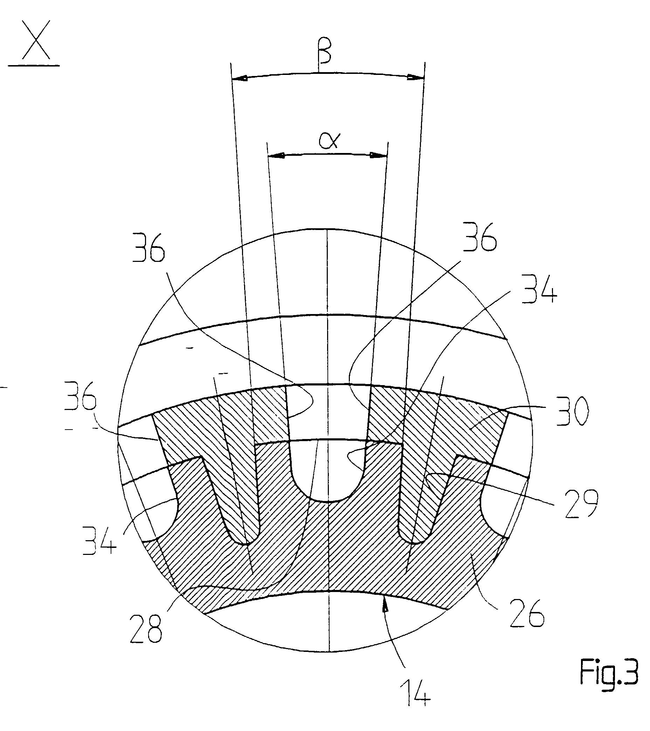

Entsprechend einer in dem in den Fig. 1 und 2 gezeigten Ausführungsbeispiel wiedergegebenen Ausgestaltung der Erfindung sind in die zweiten Einformungen 29 mit der größeren radialen Tiefe jeweils Axialstege 30 eingesetzt. Diese Axialstege sind, wie anhand der in Fig. 3 gezeigten Ausschnittvergrößerung leicht zu erkennen ist, so an die Dichtmuffe 26 angesetzt, daß sie an die Flanken der ersten Einformungen 28 der Dichtmuffe 26 jeweils radial bündig anschließen und deren radiale Tiefe etwa verdoppeln.

Der Öffnungswinkel der jeweiligen Einformungen 28 beträgt 10° ≤ ∝ ≤20°, vorzugsweise ∝ ≈ 8°, während der Öfnungswinkel der zweiten Einformungen 29 größer ist und 15° ≤ β ≤ 30°beträgt, vorzugsweise β ≈ 15°.

An den zweiten Einformungen beträgt die mit "s" bezeichnete minimale Restwanddicke der Dichtmuffe 26 ca. 40% der vollen Wanddicke der Dichtmuffe 26, während an den ersten Einformungen 28 eine Restwanddicke von etwa 60% verbleibt.

Die Wirkungsweise der erfindungsgemäßen Verschraubung 10 beruht darauf, daß durch die zuvor beschriebene Gestaltung der Axialstege 30 diese partiell tangential auf die Verformung der Dichtmuffe 26 einwirken. Infolge der erfindungsgemäß vorgesehenen nicht ausgefüllten ersten Einformungen 28 ist planmäßig ausreichend Raum zur Verfügung, in welche beim Zusamendrücken der Dichtmuffe 26 durch die auf das Grundteil 12 geschraubte Schraubkappe das sonst Verwerfungen und Falten bildende überschüssige Materialvolumen der Dichtmuffe ausweichen kann.

Hierdurch ist auch bei einer größeren Durchmesserdifferenz zwischen der zentralen Ausnehmung in der Dichtmuffe 26 einerseits und dem Durchmesser der abzudichtenden Leitung andererseits eine faltenfreie Abdichtung ermöglicht. Dabei wird die maximale Durchmesserdifferenz über den Winkel α eingestellt, nämlich dann, wenn die den Öffnungswinkel begrenzenden Flanken der ersten Einformungen 28 soweit zusammen gedrückt werden, daß sie auf Block gehen, das heißt einander berühren beziehungsweise aneinander anlegen. Die bereits erwähnte Anfasung 22 bietet zusätzlichen Freiraum.

Auf die Größe der durch die Axialstege ausgeübten wirksamen tangentialen Kräfte kann durch Veränderung des Winkels β Einfluß genommen werden. Des weiteren 26 ist das Verformungsverhalten und damit das Zugentlastungsverhalten der erfindungsgemäßen Verschraubung 10 als von der jeweils vorhandenen Restwanddicke an den ersten Einformungen 28 sowie von der Shorehärte der Dichtmuffe 26 abhängig zu sehen.

Die Fertigung des Dichtelements 14 erfolgt vorteilhafterweise mittels der Zweikomponenten-Kunststoffspritztechnik, so daß ein Minimum von zu handhabenden Teilen resultiert.

## Patentansprüche

1. Verschraubung (10) für abgedichtete Leitungsdurchführungen, insbesondere PG--Verschraubung, mit je einem stationären hülsenförmigen Grundteil (12) und einer drehbeweglichen hülsenförmigen Schraubkappe mit zentraler Ausnehmung sowie mit einem zwischen das Grundteil (12) und die Schraubkappe eingefügten ringförmigen Dichtelement (14), durch welche eine Leitung durchgeführt ist, die von dem ringförmigen Dichtelement (14) konzentrisch umfasst ist, welches Dichtelement (14) von den miteinander verschraubten Gewindehülsen elastisch verformt ist und sich abdichtend an die Leitung anlegt, dadurch gekennzeichnet, daß das Dichtelement (14) an seinem Umfang gleichmäßig verteilt angeordnete radiale Einformungen (28, 29) aufweist, die sich jeweils über die axiale Länge des Dichtelements (14) erstrecken.

2. Verschraubung nach Anspruch 1, dadurch gekennzeichnet, daß die Flanken (34) der radialen Einformungen (28, 29) abwechselnd einen Öffnungswinkel α oder β begrenzen.

3. Verschraubung nach einem der Ansprüche 1 oder 2, dadurch gekennzeichnet, daß das Dichtelement (14) von einer zentralen Dichtmuffe (26) mit gleichmäßig am äußeren Umfang verteilt angeordneten ersten und zweiten radialen Einformungen (28, 29) gebildet ist, daß die ersten Einformungen (28) den Öffnungswinkel α aufweisen, daß die zweiten radialen Einformungen (29) jeweils zwischen zwei ersten Einformungen (28) angeordnet sind und den Öffnungswinkel β aufweisen und daß in jede zweite radiale Einformung jeweils ein Axialsteg (30) eingreift, welcher die Flanken (34) der ersten Einformungen (28) radial verlängert.

4. Verschraubung nach einem der vorherigen Ansprüche, dadurch gekennzeichnet, daß das Dichtelement (14) aus zwei Komponenten gebildet ist dergestalt, daß die Axialstege (30) eine größere Shorehärte aufweisen als die Dichtmuffe (26) und diese zumindest partiell tangential beaufschlagen.

5. Verschraubung nach Anspruch 4, dadurch gekennzeichnet, daß die Axialstege (30) jeweils fest mit der zentralen Dichtmuffe (26) verbunden sind.

6. Verschraubung nach einem der vorherigen Ansprüche, dadurch gekennzeichnet, daß die radiale Tiefe der Einformungen (28, 29) höchstens 80% der Wanddicke der Dichtmuffe (26) beträgt.

7. Verschraubung nach Anspruch 6, dadurch gekennzeichnet, daßdie radiale Tiefe der ersten Einformungen (28) höchstens 50% und der zweiten Einformungen (29) höchstens 70% der Wanddicke der Dichtmuffe (26) beträgt.

8. Verschraubung nach einem der vorherigen Ansprüche, dadurch gekennzeichnet, daß die radiale Breite der Flanken (36) der Axialstege (30) der radialen Tiefe der ersten Einformungen (28) entspricht.

9. Verschraubung nach einem der vorherigen Ansprüche, dadurch gekennzeichnet, daß die Breite jedes Axialsteges (30) am äußeren Umfang größer ist als die lichte Weite der ersten Einformungen (28).

10. Verschraubung nach einem der vorherigen Ansprüche, dadurch gekennzeichnet, daß die der Schraubkappe zugewandte Stirnseite der Dichtmuffe (26) mit einer Anfasung (22) versehen ist.

11. Verschraubung nach einem der vorherigen Ansprüche, dadurch gekennzeichnet, daß am Grundteil (12) ein Bund (16) angeformt ist, an welchem eine Dichtlippe (17) angebracht ist.
